(19) Europäisches Patentamt

European Patent Office

Office européen des brevets

(11) EP 0 565 877 B1

(12) EUROPEAN PATENT SPECIFICATION

(45) Date of publication and mention
of the grant of the patent:
12.11.1997 Bulletin 1997/46

(51) Int Cl.⁶: G11B 5/53

(21) Application number: 93104191.7

(22) Date of filing: 15.03.1993

(54) **Magnetic tape recording-reproducing apparatus**

Magnetbandaufzeichnungs- und -wiedergabegerät

Appareil d'enregistrement et reproduction à bande magnétique

(84) Designated Contracting States:
DE FR GB

(30) Priority: 17.04.1992 JP 98223/92

(43) Date of publication of application:
20.10.1993 Bulletin 1993/42

(73) Proprietor: MATSUSHITA ELECTRIC INDUSTRIAL
CO., LTD.
Kadoma-shi, Osaka-fu, 571 (JP)

(72) Inventors:
• Matsumoto, Satoshi
Higashinada-ku, Kobe City 658 (JP)
• Shibaike, Narito
Hirakata City 573 (JP)

(74) Representative: Dr. Elisabeth Jung
Dr. Jürgen Schirdewahn Dipl.-Ing. Claus
Gernhardt
Postfach 40 14 68
80714 München (DE)

(56) References cited:
EP-A- 0 023 067          EP-A- 0 306 964
GB-A- 2 199 982

• PATENT ABSTRACTS OF JAPAN vol. 11, no. 2
(P-532)6 January 1987 & JP-A-61 178 761
(PIONEER) 11 August 1986

**Description**

**FIELD OF THE INVENTION AND RELATED ART STATEMENT**

**1. FIELD OF THE INVENTION**

The present invention relates to a helical-scanning magnetic tape recording-reproducing apparatus (hereinafter is referred to as helical-scanning VTR) for recording and reproducing a video signal or a sound signal by helically scanning on a magnetic tape with a rotating magnetic head of which a rotation axis is tilted relative to a running direction of the magnetic tape.

**2. DESCRIPTION OF THE RELATED ART**

In a conventional helical-scanning VTR, a video signal is recorded or reproduced on a magnetic tape by using a rotary head on which four magnetic heads are mounted on circumferential parts of a rotating substrate with the same central angle. Two cylindrical tape guide drums are placed on both sides of the rotation plane of the rotary head, and the magnetic tape is wound on the outer surface of the tape guide drum in a manner that the recording surface of the magnetic tape faces to the outer surface of the tape guide drum. The moving direction of the magnetic tape is tilted with respect to the rotation axis of the rotary head with a predetermined angle. According to the standard of the eight millimeter format video tape recorder (hereinafter is referred to as 8 mm VTR), for example, the diameter of the tape guide drum is 40 millimeters in the case of a rotary head having two magnetic heads (rotary head of two head type). On the other hand, the diameter of the tape guide drum is 26.7 millimeters in the case of a rotary head having four heads (rotary head of four head type). The 8 mm VTR is miniaturized by reduction of the diameter of the tape guide drum.

The magnetic tape is wound on the outer surface of the tape guide drum with 180 degrees or more of central angle of the tape guide drum, and is transferred to the same direction as the rotation direction of the rotary heads. In recording operation of a video signal, a rotation frequency of the rotary head (number of revolution per second) is selected to the half of a field frequency (60 Hz in the NTSC system) in the rotary head of two head type. The magnetic heads of the rotary head obliquely scan on the magnetic tape from an edge to the other edge thereof, and slant tracks on the tape having an angle which is determined by the moving speed of the magnetic tape and the rotation frequency of the rotary head are produced on the magnetic tape. The length of the track is about half of the circumferential length of the tape guide drum, and one field of the video signal is recorded in one track.

In the rotary head of four head type, the diameter of the tape guide drum is generally selected as 2/3 (two third) of the diameter of the tape guide drum in the rotary head of two head type. In this case, inter-changeability with respect to the rotary head of two head type is maintained by selecting a circumferential surface range for winding the magnetic tape to 270 degrees or more of central angle.

In the above-mentioned conventional helical-scanning VTR, the magnetic tape is transferred to a constant direction in recording or reproducing operation. Therefore, in the case that the conventional helical-scanning VTR is used for a monitoring video recording apparatus in which long endurance recording is required and a recorded video image is allowed to be erased after a predetermined time length, the magnetic tape must be returned to a starting point and after a rewinding operation when the magnetic tape has arrived at the end point. Consequently, monitoring operation is suspended during the rewinding operation.

**OBJECT AND SUMMARY OF THE INVENTION**

An object of the present invention is to provide a helical-scanning VTR in which the recording area of a magnetic tape is divided into at least two areas along the moving direction of the magnetic tape, and when the magnetic tape is moved to a forward direction, a video signal is recorded on one of two areas, and when the magnetic tape is moved to a reverse direction, the video image is recorded on the other area.

The magnetic tape recording-reproducing apparatus in accordance with the present invention comprises:

a rotary head having at least four magnetic heads mounted on a circumference of a substrate of a predetermined diameter and rotating with a predetermined rotation frequency,
means for guiding a magnetic tape moving along the circumference in a moving direction slanted by a predetermined angle with respect to a rotation plane of the rotary head,
driving means for moving the magnetic tape to one direction selected from a forward direction and a reverse direction,
field signal dividing means for dividing a field signal of a video signal to be recorded on the magnetic tape into at least two field segment signals, and
head switching means for selecting during rotation the magnetic heads in a manner that the divided field segment signal is recorded on one area of two recording areas of the magnetic tape divided into two areas in parallel to the moving direction during moving in the forward direction of the magnetic tape, and differently selecting the same magnetic heads in a manner that the field segment signal is recorded in the other area of the two recording areas during moving in the reverse direction of the magnetic tape.

While the novel features of the invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWINGS

FIG.1 is a plan view of a rotary head of a helical-scanning VTR of a first embodiment in accordance with the present invention;

FIG.2 is a diagram of recorded tracks on a magnetic tape in the first embodiment;

FIG.3 is a timing chart representing operation of the rotary head in the first embodiment;

FIG.4 is a block diagram of a recording control device in the first and second embodiments in accordance with the present invention;

FIG.5 is a timing chart representing operation of the rotary head in the first embodiment;

FIG.6 is a block diagram of a reproducing control device in the first and second embodiments in accordance with the present invention;

FIG.7 is a timing chart representing operation of the rotary head in the case that a video signal is recorded in the conventional recording method by using the rotary head of the first embodiment;

FIG.8 is a plan view of a rotary head of the helical-scanning VTR of a second embodiment in accordance with the present invention;

FIG.9 is a diagram representing recorded tracks on the magnetic tape in the second embodiment;

FIGs. 10 and 11 are timing charts representing operation of the rotary head in the second embodiment;

FIG.12 is a timing chart representing operation of the rotary head in the case that a video signal is recorded in the conventional recording method by using the rotary head in the second embodiment;

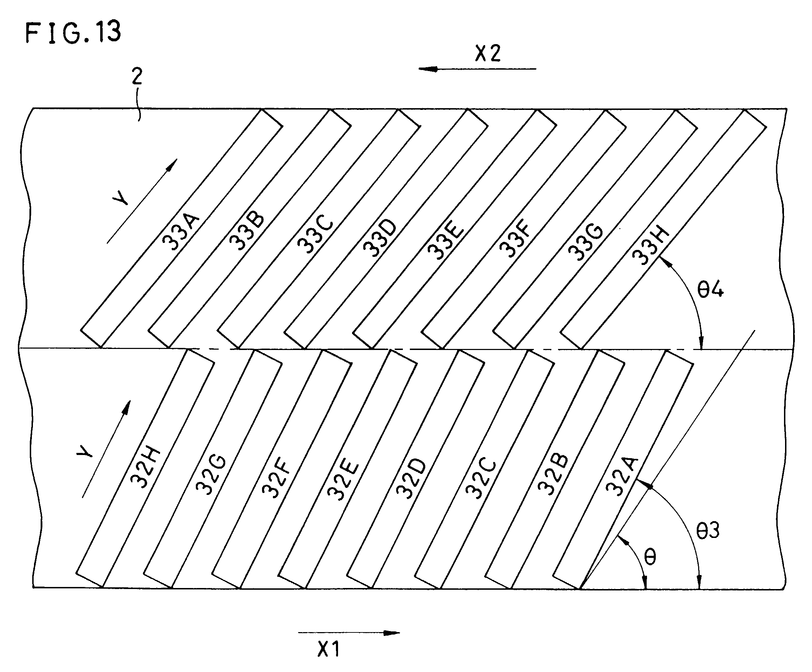

FIG.13 is a diagram representing recorded tracks on the magnetic tape in an example of the second embodiment.

It will be recognized that some or all of the Figures are schematic representations for purposes of illustration and do not necessarily depict the actual relative sizes or locations of the elements shown.

## DESCRIPTION OF THE PREFERRED EMBODIMENTS

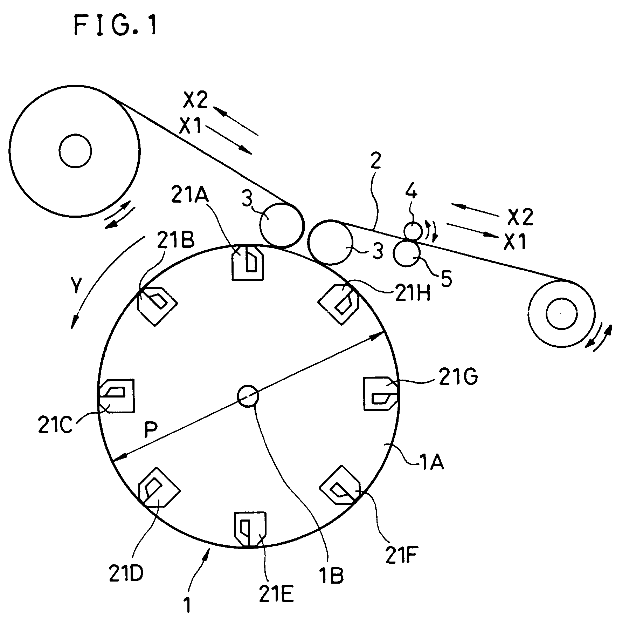

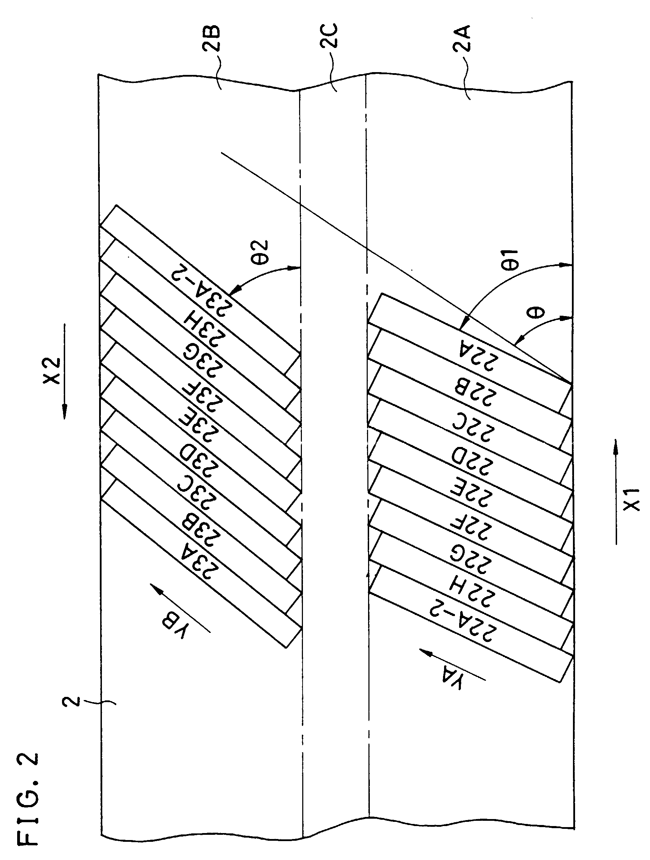

FIG.1 is a plan view of a rotary head 1 of a first embodiment in accordance with the present invention. Referring to FIG.1, the rotary head 1 is provided with eight magnetic heads 21A, 21B, 21C, 21D, 21E, 21F, 21G and 21H (hereinafter is referred to as heads 21A --- 21H) on the circumference of a substrate 1A which is rotated in a direction shown by an arrow Y by a rotating mechanism omitted from illustration. The heads 21A --- 21H are mounted with 45 degrees of central angle therebetween. Two cylindrical tape guide drums which are well-known in the art and are omitted from illustration are placed on both sides of the rotation plane of the rotary head 1. The heads 21A --- 21H are fixed on the substrate 1A in a manner that respective head gap parts of the heads 21A ---21H are protruded from the surface of the tape guide drums. The magnetic tape 2 is helically wound on the tape guide drums by the help of two rollers 3, and thereby the moving direction of the magnetic tape 2 is tilted to the rotation axis 1B of the rotary head 1 by a lead angle $\theta$ shown in FIG.2, which is well-known in the art.

An outside diameter P of the tape guide drums is about 22.9 mm in the standard of the 8 mm VTR. In general representation, when the number of the head is represented by "4n" (n: natural number), the diameter P of the tape guide drums is given by

$$P = P1 \times (2n)/(4n-1),$$

where, P1 is a diameter of the tape guide drums in the rotary head of two head type.

The magnetic tape 2 is wound in the range of 330 degrees of central angle on the circumferential surface of the tape guide drums, and a video signal is recorded in the range of 315 degrees of central angle. In general representation, the central angle is given by

$$360 \times (4n-1)/(4n) \text{ (degrees),}$$

where, n is a natural number.

The 315 degrees of central angle is 7/4 (seven forth) of the central angle in the conventional rotary head of two head type. The magnetic tape 2 is transferred to a forward direction X1 or a reverse direction X2 by a capstan 4 and a pinch roller 5 which are known in the art.

First, when the magnetic tape 2 is transferred to the forward direction X1, recording operation is elucidated hereafter. The rotation frequency $f_1$ (number of revolution per second) of the rotary head 1 is set to 45 Hz which is 3/4 of 60 Hz of standard field frequency $f_0$ (number of field per second). In general representation, the rotation frequency $f_1$ is given by

$$f_1 = f_0 \times (2n-1)/(2n), \qquad \text{(n: natural number).}$$

It is desirable that the moving speed of the magnetic tape 2 is twice of that of the conventional video tape recorder of four head type.

FIG.2 represents tracks produced on the magnetic tape 2 by the rotary head 1 in the first embodiment. A head 21A of the rotary head 1 scans on the magnetic tape 2 in the direction YA during the rotation of the rotary head 1 by (360×3/8) degrees of rotation angle, and thereby a track 22A is produced on the magnetic tape 2 as described in detail hereafter. In general representation, the rotation angle of the rotary head 1 is given by

$$360 \times (2n-1)/(4n) \text{ degrees,} \qquad \text{(n: natural number).}$$

A tilt angle $\theta 1$ of the tracks depends on the lead angle $\theta$, the moving speed of the magnetic tape 2 and the rotation speed of the rotary head 1. In a similar manner, tracks 22B, 22C, 22D, 22E, 22F, 22G and 22H are produced on the magnetic tape 2 in the named order by the heads 21F, 21C, 21H, 21E, 21B, 21G and 21D, respectively.

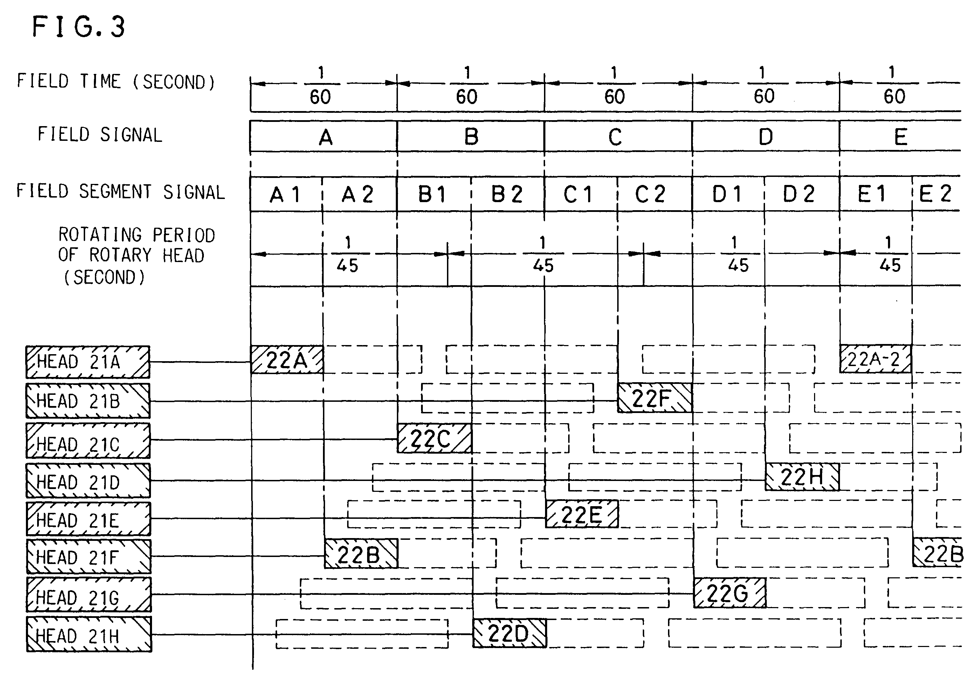

FIG.3 is a timing chart representing the field signals A, B, C and D to be recorded in the tracks 22A ---22H by the heads 21A --- 21H. Since the number of field per second is 60, a "field time" which is defined as a time length of one field signal of the video signal is 1/60 seconds. Each field signal is divided into two parts. Namely, field signals A, B, C, D and E are divided into field segment signals (A1, A2), (B1, B2), (C1, C2), (D1, D2) and (E1, E2).

Since the rotation frequency of the rotary head 1 is 45 Hz, a time length of one rotation of the rotary head 1 is 1/45 seconds. The field segment signal A1 in the first half of the field signal A is recorded in the track 22A by the head 21A, and the field segment signal A2 in the latter half is recorded in the track 22B by the head 21F. In a similar manner, the field segment signal B1 in the first half of the field signal B is recorded in the track 22C by the head 21C, and the field segment signal B2 in the latter half is recorded in the track 22D by the head 21H.

The field segment signals C1, C2, D1 and D2 are recorded in the tracks 22E, 22F, 22G and 22H by the heads 21E, 22B, 21G and 21D as shown in FIG.3. The field segment signal E1 is recorded in the track 22A-2 which is produced by the head 21A after the track 22H, and hereafter the same operation is repeated. As mentioned above, the field signals A --- E are recorded on the lower part 2A of the magnetic tape 2 as shown in FIG.2.

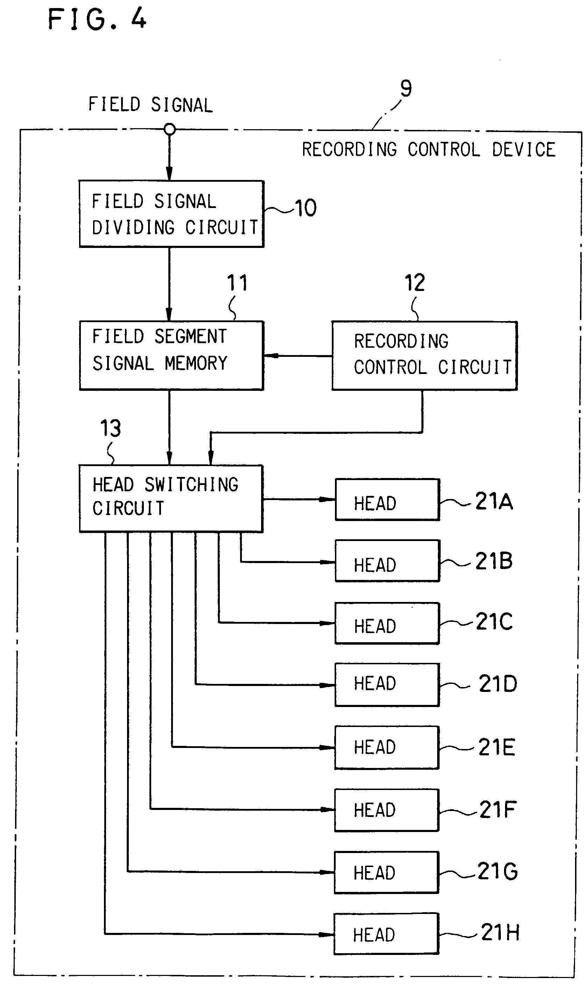

The field segment signals A1 --- E2 which are applied to the heads 21A --- 21H are controlled by a recording control device 9 shown in FIG.4. Referring to FIG.4, each field signal A, B, C or E is divided into two parts in a field signal dividing circuit 10, and the field segment signals A1, A2, B1, B2, C1, C2, E1, E2 are obtained. The field segment signals A1 --- E2 are stored in a field segment signal memory 11. The stored field segment signals A1 --- E2 are applied to a head switching circuit 13 with timing shown in the timing chart of FIG.3 in compliance with a control signal which is supplied from a recording control circuit 12.

In the head switching circuit 13, the field segment signals A1 --- E2 applied from the field segment signal memory 11 are distributed to the heads 21A --- 21H in the order shown in FIG.3 in compliance with the control signal supplied from the recording control circuit 12. In FIG.3, boxes illustrated with dotted lines represent periods in which the heads 21A --- 21H contact the recording surface of the magnetic tape 2 but the field segment signals are not applied to the heads.

The recording operation in case where the tape moves reverse to the direction X2 of the magnetic tape 2 is elucidated hereafter. Referring to FIG.2, when the magnetic tape 2 is transferred to the reverse direction X2, the field segment signals A1 --- E2 are recorded in the upper part 2B of the magnetic tape 2. Since the rotating direction of the rotary head 1 is not changed, the magnetic heads 21A --- 21H scan on the video tape 2 in a direction shown by an arrow YB, and tracks 23A --- 23H are produced. In this case, a tilt angle $\theta 2$ between the moving direction of the magnetic tape 2 and the tracks 23A --- 23H is smaller than the lead angle $\theta$.

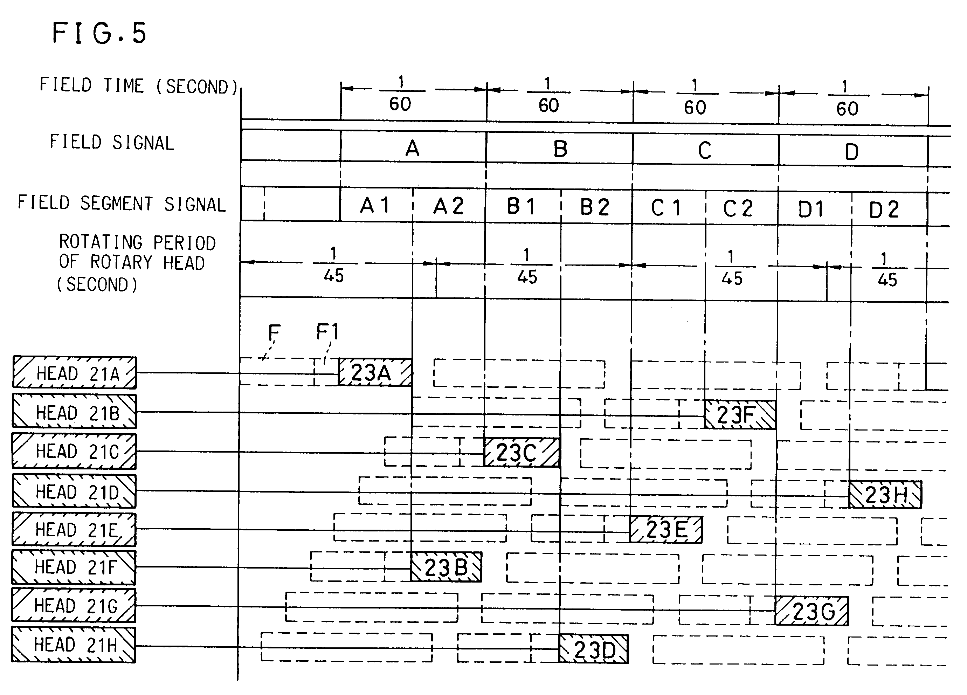

FIG.5 is a timing chart representing the field segment signals A1 --- D2 which are recorded on the tracks 23A --- 23H by the heads 21A --- 21H. The recording operation based on the timing chart of FIG.5 is substantially identical with that of FIG.3, and the elucidation is omitted. In FIG.5, a left zone F in the box illustrated with a dotted line represents a time length in which a field segment signal is applied to a corresponding head when the magnetic tape 2 is moved to the forward direction X1. Additionally, a zone F1 between the left zone F and a box representing the track 23A represents a time length in which the field segment signals A1 --- D2 are not applied to any magnetic head during moving in the forward direction X1 or the reverse direction X2. Other boxes having the same shape in FIG.5 represent the same meaning.

In FIG.2, a blank part 2C on which any signal is not recorded is produced between the tracks 22A --- 22H and the tracks 23A --- 23H on the magnetic tape 2 due to the above-mentioned non-recording time. The width of the blank portion 2C corresponds to 1/8 of the circumferential length of the tape guide drum. A utilization ratio of the recording area of the magnetic tape 2 is reduced to 6/7 of that in the recording method of the conventional VTR due to the blank portion 2C.

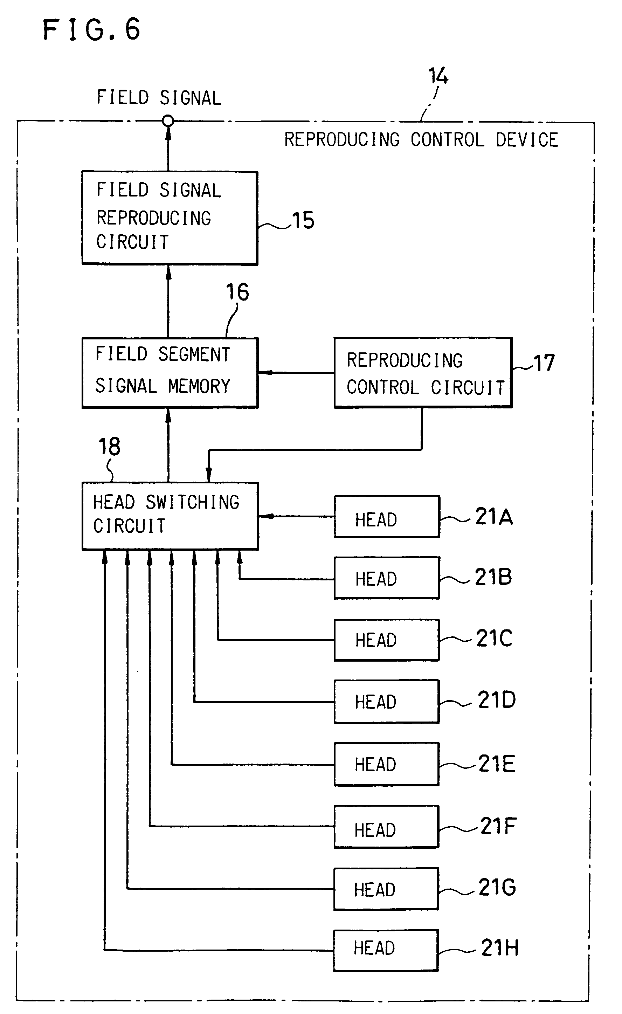

Reproducing operation in the magnetic tape recording-reproducing apparatus of the first embodiment is elucidated hereafter. The video signal recorded in the magnetic tape 2 with the rotary head 1 is reproduced by the same rotary head 1 and is inputted to a reproducing control device 14 shown in FIG.6. In FIG.6, the field segment signals A1 --- E2 detected by the heads 21A --- 21H are stored in a field segment signal memory 16 through a head switching circuit 18 which is controlled by a control signal applied from a reproducing control circuit 17. In the head switching circuit 18, the heads 21A ---21H are switched in a similar manner to the operation in the head switching circuit 13 of the recording control device 9. The stored field segment signals A1 --- E2 are read out in a predetermined order in compliance with the control signal applied from the reproducing control circuit 17 and are applied to a field signal reproducing circuit 15.

In the field signal reproducing circuit 15, the field segment signals A1 --- E2 are connected in the same order as that in the recording operation and are output as the field signals A --- E. Signal processing operation after the above-mentioned process is identical with that of the conventional helical-scanning VTR.

In the first embodiment, in order to reduce crosstalk between neighboring two tracks, gap azimuths of two heads which scan the neighboring two tracks are made different from each other. For this purposes, the gap azimuths of the neighboring two heads (heads 21A and 21b, for example) are different from each other. Moreover, two heads having 90 degree central angle (generally represented by 180/n) therebetween are mounted in a manner having the same gap azimuth (heads 21A and 21C, for example). Consequently, the gap azimuths of two heads mounted with 135 degrees of central angle (heads 21A and 21F, for example) are different from each other. Inter-changeability between plural helical-scanning recording-reproducing apparatus of the first embodiment is maintained by the above-mentioned gap azimuth arrangement. In FIG.3, directions of oblique lines in the boxes representing the heads 21A --- 21H and the tracks 22A ---22H indicate the directions of the gap azimuth and resultant azimuth on the magnetic tape 2.

According to the first embodiment mentioned above, the recording area of the magnetic tape 2 is divided into two parts 2A and 2B with respect to the width direction; and the video signal is recorded on one part 2A by moving the video tape 2 to the forward direction X1 and is recorded on the other part 2B by moving it to the reverse direction X2. When the end of the magnetic tape 2 has arrived, the moving direction of the magnetic tape 2 is reversed in a manner as is well known in the art. Consequently, rewinding operation of the magnetic tape 2 is not needed, and a long time recording or reproducing is made possible by reciprocating operation of the magnetic tape 2.

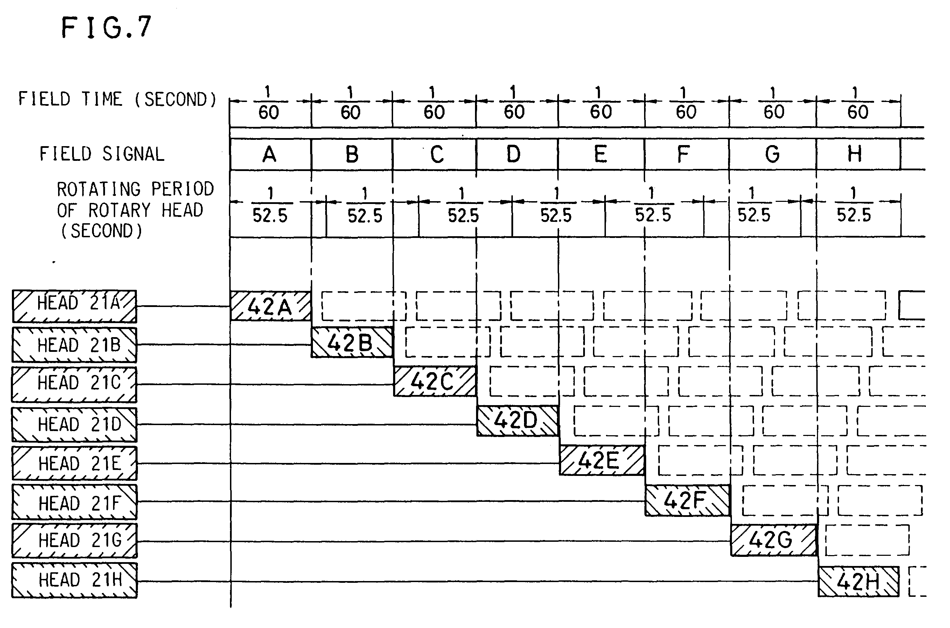

FIG.7 is a timing chart representing operation of the rotary head 1 in recording operation of a conventional track format by using the helical scanning recording-reproducing apparatus of the first embodiment. The rotary head 1 shown in FIG.1 is rotated with 52.5 Hz of rotation frequency $f_2$ which is 7/8 of 60 Hz of field frequency. The rotation frequency $f_2$ is generally given by

$$f_2 = f_0 \times (4n-1)/(4n), \qquad \text{(n: natural number)},$$

where, $f_0$ is the field frequency (60 Hz). Referring to FIG. 7, the field signal A is recorded by the head 21A during rotation of the rotary head 1 by $360 \times 7/8$ degrees of rotation angle. The rotation angle is generally given by

$$360 \times (4n-1)/(4n) \text{ degrees}, \qquad \text{(n: natural number)}.$$

Consequently, one oblique track (not shown) is produced between both the edges of the magnetic tape 2 by scanning of the head 21A in a similar manner to the conventional VTR. In a similar manner, tracks 42B --- 42H are produced by the head 21B --- 21H, respectively. Thereby recording or reproducing operation in the same format as the conventional VTR is realizable. Namely, in the first embodiment of the present invention, inter-changeability between the recording or reproducing format in the first embodiment and the format of the conventional VTR is realized by changing the rotation frequency of the rotary head 1 and by making the moving speed of the magnetic tape 2 equal to that of the conventional VTR. In the first embodiment, the number of the heads 21A --- 21H is generally selected to 4n (n: natural number).

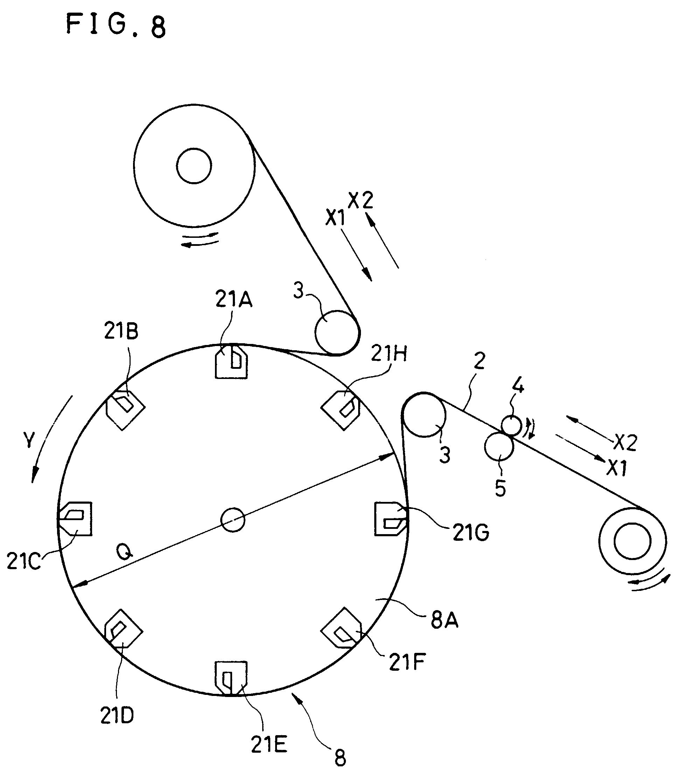

FIG.8 is a plan view of a rotary head 8 of a second embodiment in accordance with the present invention. The rotary head 8 is substantially identical with the rotary head 1 in the first embodiment with the exception of difference in a diameter Q (about 26.7 mm) of tape guide drums which are applied to the rotary head 8. The diameter 26.7 mm is equal to that of the conventional 8 mm VTR of four head type, and is 2/3 of the diameter of the tape guide drums in the rotary head of two head type. The diameter Q is generally given by

$$Q = Q1 \times (n)/(2n-1), \qquad \text{(n: natural number)},$$

where, Q1 is the diameter (40 mm) of the tape guide drums in the 8 mm VTR of two head type. The magnetic tape 2 is wound on the circumferential surface of the tape guide drums (not shown) in the range of about 300 degrees of central angle, and the video signal is recorded in the range of circumferential surface of 270 degrees of central angle. The central angle is generally given by

$$360 \times (2n-1)/(2n) \text{ degrees}, \qquad \text{(n: natural number)}.$$

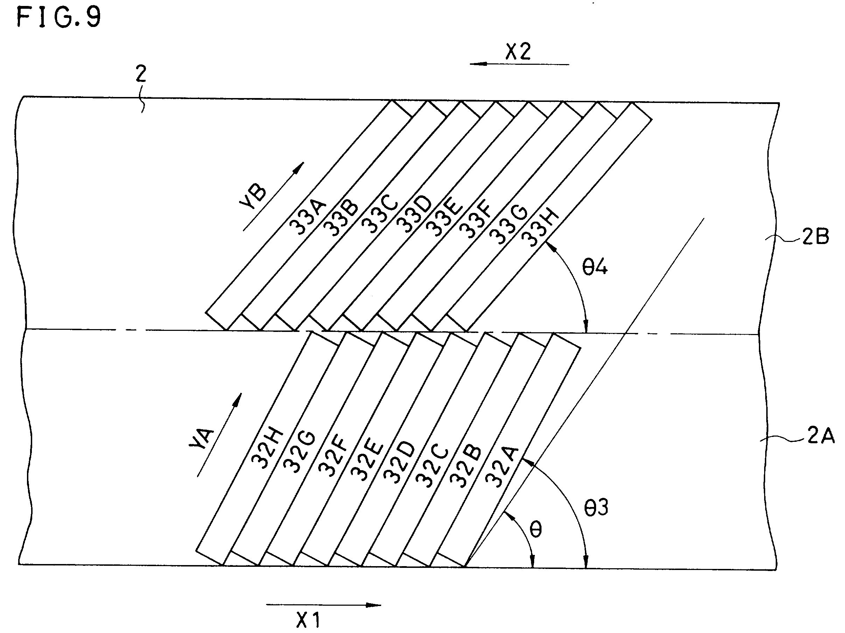

FIG.9 is a diagram illustrating tracks produced on the magnetic tape 2 by the rotary head 8 of the second embodiment. Referring to FIG.9, when the magnetic tape 2 is moved to the forward direction X1 to record a video signal, tracks 32A --- 32H are produced on the lower part 2A of the magnetic tape 2. On the other hand, when the magnetic tape 2 is moved to the reverse direction X2, tracks 33A --- 33H are produced on the upper part 2B of the magnetic tape 2. In the second embodiment, since the diameter Q of the tape guide drums is identical with that of the tape guide drums of the conventional 8 mm VTR of four head type, the upper ends of the tracks 32A --- 32H and the lower ends of the tracks 33A --- 33H are very close together. Consequently, a blank part such as the blank part 2C in FIG.2 is not produced between the lower part 2A and the upper part 2B on the magnetic tape 2. And the utilization ratio in the recording area of the magnetic tape 2 is improved in comparison with that of the first embodiment.

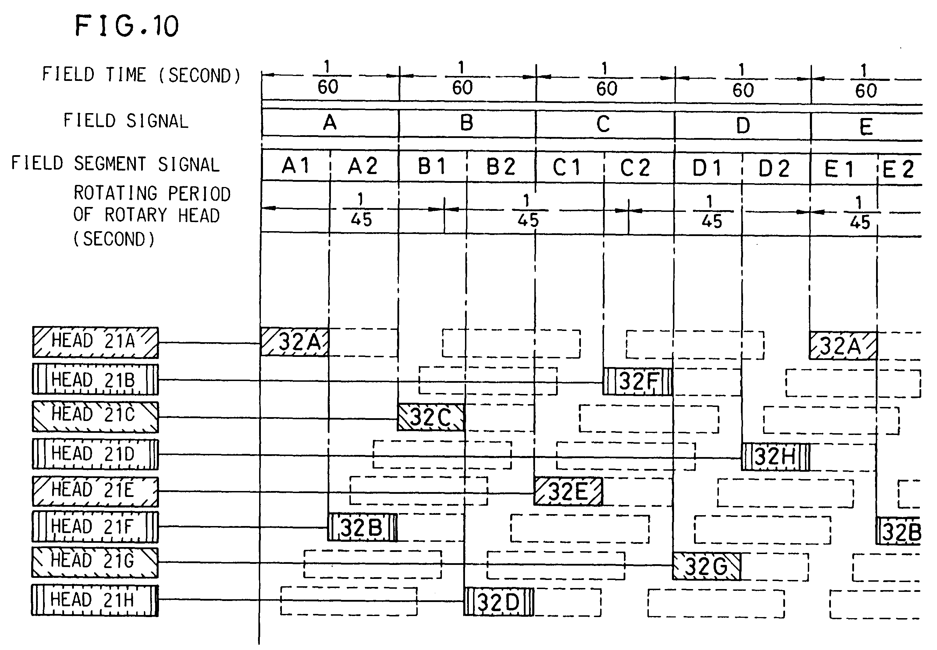

FIG.10 is a timing chart illustrating the tracks 32A --- 32H in which the field segment signals A1 --- D2 are recorded by the magnetic head 21A --- 21H of the rotary head 8 during moving to the forward direction X1 of the magnetic tape 2. The timing chart shown in FIG.10 is substantially identical with that shown in FIG.3.

The rotation frequency of the rotary head 8 is 45 Hz. The rotation frequency is generally given by

$$60 \times (2n-1)/(2n) \text{ Hz}, \qquad (n: \text{natural number}),$$

where, 60: field frequency. The field segment signal A1 is recorded in the track 32A by the head 21A during a rotation period (1/120 seconds) of 135 degrees of rotation angle. The rotation angle is generally given by

$$360 \times (2n-1)/(4n) \text{ degrees}, \qquad (n: \text{natural number}).$$

Subsequently, the field segment signal A2 is recorded in the track 32B by the head 21F during the subsequent rotation period of 135 degrees of rotation angle. In a similar manner, field segment signals B1, B2, C1, C2, D1 and D2 are recorded in the tracks 32C, 32D, 32E, 32F, 32G and 32H by the heads 21C, 21H, 21F, 21B, 21g and 21D, respectively.

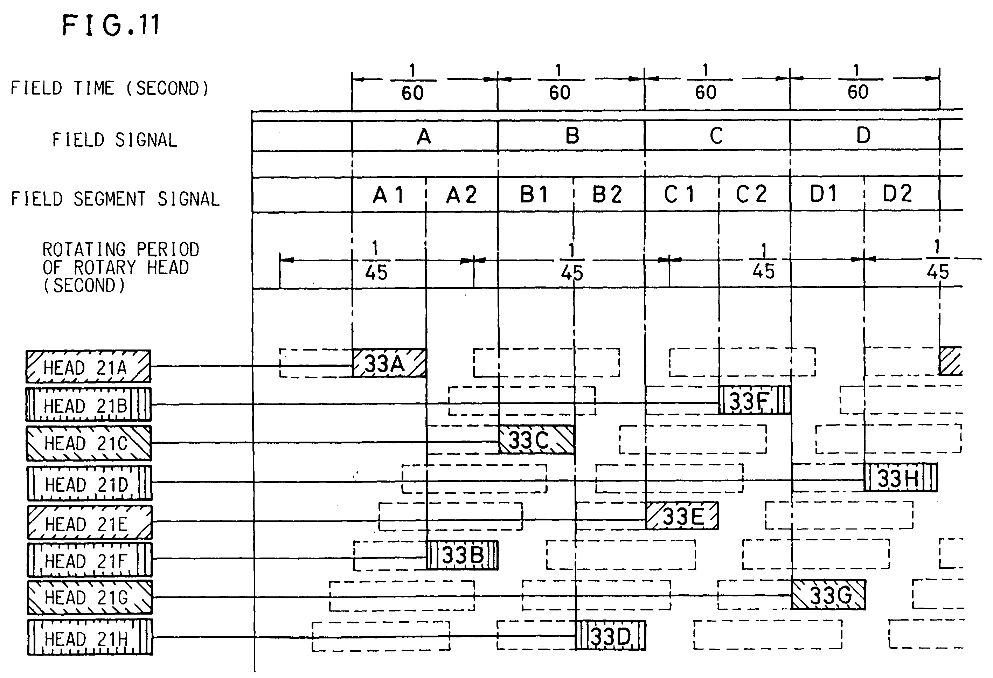

FIG.11 is a timing chart illustrating the tracks 33A --- 33H in which the field segment signals A1 --- D2 are recorded by the head 21A --- 21H during moving to the reverse direction X2 of the magnetic tape 2. The timing chart in FIG.11 is substantially identical with that shown in FIG.5, and detailed description is omitted.

In the second embodiment, in the case that crosstalk is generated between the tracks 32A --- 32H and the tracks 33A --- 33H, the lower ends of the tracks 33A --- 33H are spaced out of the upper ends of the tracks 32A --- 32H by controlling positional relation between the tracks 32A --- 32H and the tracks 33A --- 33H. Such control is realizable by controlling the recording timing in the tracks 33A --- 33H on the basis of the recorded signal in the tracks 32A --- 32H in the recording operation of the tracks 33A --- 33H.

Furthermore, in order to prevent crosstalk between the neighboring two tracks in the tracks 32A ---32H, it is preferable that the gap azimuths between neighboring two heads in the head 21A --- 21H of the rotary head 8 are different from each other. In this case, in order to keep inter-changeability between the helical scanning recording-reproducing apparatus in the second embodiment and the conventional 8 mm VTR, four heads placed with 90 degrees of central angle are selected from the heads 21A --- 21H. The selected four heads are the heads 21A, 21C, 21E and 21G, for example.

The heads 21A --- 21H of the rotary head 8 are mounted on a substrate 8A in a manner that the gap azimuths between two heads mounted with 90 degrees of central angle are different from each other (This central angle is generally given by 180/n degrees, n: natural number). The gap azimuths between two heads mounted with 180 degrees of central angle are identical with each other (This central angle is generally given by 360/n degrees, n: natural number). In order to meet this requirement, the heads 21A --- 21H are mounted with three kinds of gap azimuth. For example, the heads 21A and 21E are mounted with a first gap azimuth, the heads 21C and 21G are mounted with a second gap azimuth. Additionally, the heads 21B, 21D, 21F and 21H are mounted with a third gap azimuth.

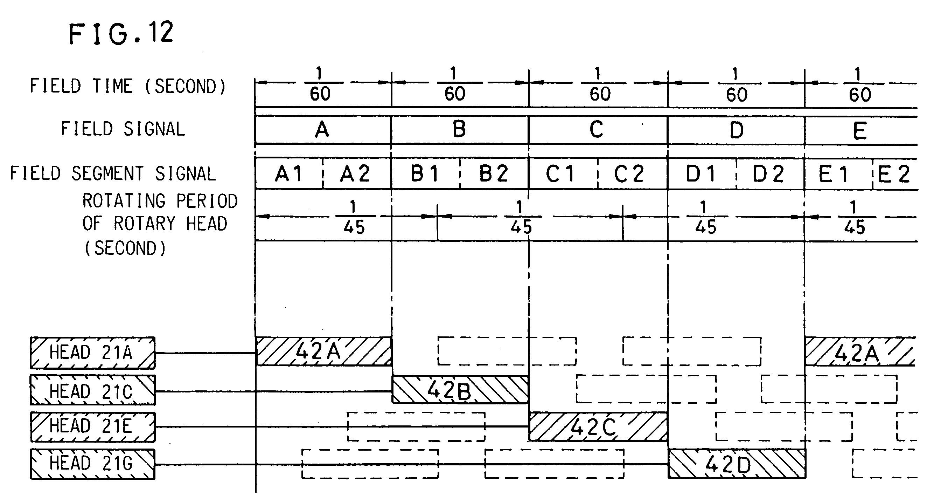

FIG.12 is a timing chart illustrating relation among the heads 21A, 21C, 21E, 21G and the tracks 42A, 42B, 42C, 42D in the case that the video signal is recorded in accordance with the conventional 8 mm VTR format in the helical scanning recording-reproducing apparatus of the second embodiment. Referring to FIG.12, the tracks 42A, 42B, 42C, 42D are produced between both edges of the magnetic tape 2 by the heads 21A, 21C, 21D and 21G, respectively. In the second embodiment, the tracks 42A --- 42D are produced by rotation of the rotary head 8 by the rotation angle generally given by

$$360 \times (2n-1)/(2n) \text{ degrees}, \qquad (n: \text{natural number}).$$

In FIGs. 10, 11 and 12, the direction of the oblique lines in the boxes illustrating the heads 21A ---21H, the tracks 32A --- 32H and the tracks 42A --- 42D represent the directions of the first and second azimuths. Moreover, vertical lines in the boxes represent the direction of the third azimuth.

Incidentally, in the case that the moving speed of the magnetic tape 2 is twice or more of that of the conventional 8 mm VTR, as shown in FIG.11, a guard band are produced between the neighboring two tracks. Consequently the crosstalk is significantly reduced.

In the first and second embodiments mentioned above, the description has made by taking the example of the format of the 8 mm VTR. However, the helical-scanning recording-reproducing apparatus in accordance with the present invention is not only restricted to the 8 mm VTR, but also applicable to any kind of format of various helical scanning recording-reproducing apparatus.

Although the present invention has been described in terms of the presently preferred embodiments, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true scope of the invention.

**Claims**

1. A magnetic tape recording-reproducing apparatus comprising:

> a rotary head (1) having at least four magnetic heads (21A---21H) mounted on the circumference of a substrate (1A) of a predetermined diameter and rotating with a predetermined rotation frequency,
> means (3) for guiding a magnetic tape (2) moving along said circumference in a moving direction slanted by a predetermined angle ($\theta$) with respect to the rotation plane of said rotary head,
> driving means (4,5) for moving said magnetic tape (2) to one direction selected from a forward direction (X1) and a reverse direction (X2),
> field signal dividing means (10) for dividing a field signal (A---D) of a video signal to be recorded on said magnetic tape into at least two field segment signals (A1,A2---D2), and
> head switching means (13) for selecting during rotation said magnetic heads (21A---21H) in a manner that said divided field segment signal (A1---D2) is recorded on one area (2A) of two recording areas (2A,2B) of the magnetic tape (2) divided into two areas in parallel to said moving direction during moving to said forward direction (X1) of said magnetic tape, and differently selecting the same magnetic heads in a manner that said field segment signal is recorded in the other area (2B) of said two recording areas during moving to said reverse direction (X2) of said magnetic tape (2).

2. A magnetic tape recording-reproducing apparatus comprising:

> a rotary head (1) having magnetic heads (21A---21H) of the number of 4n, where n is a natural number, mounted on a circumference of a substrate (1A) of a predetermined diameter and rotating with a predetermined rotation frequency,
> a magnetic tape (2) moving along said circumference in a range of 360×(4n-1)/(4n) degrees of central angle in a moving direction slanted by a predetermined angle ($\theta$) with respect to a rotation plane of said rotary head,
> driving means (4,5) for moving said magnetic tape to one direction selected from a forward direction (X1) and a reverse direction (X2),
> field signal dividing means (10) for dividing a field signal (A) of a video signal to be recorded on said magnetic tape into at least two field segment signals (A1,A2), and
> head switching means (13) for switching on each of said magnetic heads (21A---21H) every 360×(2n-1)/(4n) degrees in a manner that said divided field segment signal is recorded on one area (2A) of two recording areas (2A,2B) of the magnetic tape (2) divided into two areas in parallel to said moving direction during moving to said forward direction (X1) of said magnetic tape, and said field segment signal is recorded in the other area (2B) of said two recording areas during moving to said reverse direction (X2) of said magnetic tape.

3. A magnetic tape recording-reproducing apparatus in accordance with claim 2, wherein

> each of said magnetic heads (21A---21H) of the rotary head (1) is switched on every 360×(4n-1)/(4n) degrees of rotation angle to produce continuous tracks between both edges of said magnetic tape (2).

4. A magnetic tape recording-reproducing apparatus in accordance with claim 2, wherein

> said magnetic heads (21A---21H) of said rotary head (1) are mounted on said substrate (1A) in a manner that gap azimuths of neighboring two magnetic heads are different from each other, and two magnetic heads mounted with 180/n degrees of central angle have the same gap azimuth.

5. A magnetic tape recording-reproducing apparatus in accordance with claim 2, wherein

> when a field frequency which is given by the number of field per second is represented by $f_0$, said rotation frequency $f_1$ of said rotary head is given by $f_0 \times (2n-1)/(2n)$ Hz.

6. A magnetic tape recording-reproducing apparatus in accordance with claim 2, wherein

> when a field frequency which is given by the number of field per second is represented by $f_0$, a rotation frequency $f_2$ of said rotary head is given by $f_0 \times (4n-1)/(4n)$ Hz.

7. A magnetic tape recording-reproducing apparatus comprising:

> a rotary head (8) having magnetic heads (21A---21H) of the number of 4n, where n is a natural number, mounted on a circumference of a substrate (8A) of a predetermined diameter and rotating with a predetermined rotation frequency,
> a magnetic tape (2) moving along said circumference in a range of 360×(2n-1)/(2n) degrees of central angle in a moving direction slanted by a predetermined angle with respect to a rotation plane of said rotary head,
driving means (4,5) for moving said magnetic tape (2) to one direction selected from a forward direction (X1) and a reverse direction (X2), field signal dividing means (10) for dividing a field signal (A---D) of a video signal to be recorded on said magnetic tape into at least two field segment signals (A1,A2,---D2), and head switching means (13) for switching on each of said magnetic heads every $360 \times (2n-1)/(4n)$ degrees of rotation angle in a manner that said divided field segment signal is recorded on one area (2A) of two recording areas (2A, 2B) of the magnetic tape divided into two areas in parallel to said moving direction during moving to said forward direction (X1) of said magnetic tape, and said field segment signal is recorded in the other area (2B) of said two recording areas during moving to said reverse direction (X2) of said magnetic tape.

8. A magnetic tape recording-reproducing apparatus in accordance with claim 1, 2 or 7, wherein
when a moving speed of said magnetic tape to produce a continuous track between both the edges of said magnetic tape is represented by $V_1$, a moving speed $V_2$ of said magnetic tape is given by $V_2 \geqq 2 \times V_1$.

9. A magnetic tape recording-reproducing apparatus in accordance with claim 7, wherein
said head switching means (13) switches on each of said magnetic heads every $360 \times (2n-1)/(2n)$ degrees of rotation angle of said rotary head to produce a continuous track between both the edges of said magnetic tape.

10. A magnetic tape recording-reproducing apparatus in accordance with claim 7, wherein
gap azimuths of neighboring two magnetic heads of said rotary head are different from each other, two magnetic heads mounted with 360/n degrees of central angle have the same gap azimuth, and gap azimuths of at least one pair of the magnetic heads mounted with 180/n degrees of central angle are different from each other.

11. A magnetic tape recording-reproducing apparatus in accordance with claim 7, wherein
when a field frequency which is given by the number of field per second is represented by $f_0$, said rotation frequency of said rotary head is given by $f_0 \times (2n-1)/(2n)$ Hz.

**Patentansprüche**

1. Magnetbandaufzeichnungs- und -wiedergabegerät, aufweisend:

Einen Rotationskopf (1) mit wenigstens vier Magnetköpfen (21A bis 21H), die auf dem Umfang eines Substrats (1A) eines vorbestimmten Durchmessers angebracht sind und sich mit einer vorbestimmten Rotationsfrequenz drehen, Mittel (3) zum Führen eines Magnetbands (2), das sich entlang dem Umfang in eine Bewegungsrichtung bewegt, die unter einem vorbestimmten Winkel (θ) in bezug auf die Rotationsebene des Rotationskopfes schräg verläuft, Antriebsmittel (4, 5) zum Bewegen des Magnetbands (2) in einer Richtung, die aus einer Vorwärtsrichtung (X1) und einer Rückwärtsrichtung (X2) ausgewählt ist, Halbbildsignal-Unterteilungsmittel (10) zum Unterteilen eines Halbbildsignals (A bis D) eines Videosignals, das auf dem Magnetband aufgezeichnet werden soll, in wenigstens zwei Halbbildsegmentsignale (AI, A2 bis D2), und eine Kopfumschalteinrichtung (13) zum auswählen der Magnetköpfe (21A bis 21H) während der Rotation derart, daß das unterteilte Halbbildsegmentsignal (A1 bis D2) auf einem Bereich (2A) von zwei Aufzeichnungsbereichen (2A, 2B) des Magnetbands (2) aufgezeichnet wird, das in zwei Bereiche parallel zu der Bewegungsrichtung während der Bewegung in der Vorwärtsrichtung (X1) des Magnetbands unterteilt ist, und zum unterschiedlichen Auswählen derselben Magnetköpfe in einer Weise, daß das Halbbildsegmentsignal in dem anderen Bereich (2B) der zwei Aufzeichnungsbereiche während der Bewegung in der Rückwärtsrichtung (X2) des Magnetbands (2) aufgezeichnet wird.

2. Magnetbandaufzeichnungs- und -wiedergabegerät aufweisend:

einen Rotationskopf (1) mit Magnetköpfen (21A bis 21H) in einer Anzahl 4n (wobei n eine natürliche Zahl ist), die auf einem Umfang eines Substrats (1A) eines vorbestimmten Durchmessers angebracht sind und der sich mit einer vorbestimmten Rotationsfrequenz dreht, ein Magnetband (2), das sich entlang dem Umfang unter einem Mittelwinkel im Bereich von $360 \times (4n-1)/(4n)$ Grad in einer Bewegungsrichtung bewegt, die um einen vorbestimmten Winkel θ in bezug auf eine Rotationsebene des Rotationskopfs schräg verläuft, Antriebsmittel (4, 5) zum Bewegen des Magnetbands in einer Richtung, die aus einer Vorwärtsrichtung (X1) und einer Rückwärtsrichtung (X2) ausgewählt ist, Halbbildsignal-Teilungsmittel (10) zum Unterteilen eines Halbbildsignals (A) eines auf dem Magnetband aufzuzeichnenden Videosignals in wenigstens zwei Halbbildsegmentsignale (A1, A2), und

Kopfumschaltmittel (13) zum Umschalten eines jeden der Magnetköpfe 21A bis 21H alle 360x(2n-1)/(4n) Grad derart, daß das unterteilte Halbbildsegmentsignal auf einem Bereich (2A) von zwei Aufzeichnungsbereichen (2A, 2B) des Magnetbands (2) aufgezeichnet werden, das in zwei Bereiche parallel zu der Bewegungsrichtung während der Bewegung in der Vorwärtsrichtung (X1) des Magnetbands unterteilt wird, und das Halbbildsegmentsignal im anderen Bereich (2B) der zwei Aufzeichnungsbereiche während der Bewegung in der Rückwärtsrichtung des Magnetbands aufgezeichnet wird.

3. Magnetbandaufzeichnungs- und -wiedergabegerät nach Anspruch 2, wobei jeder der Magnetköpfe (21A bis 21H) des Rotationskopfs (1) alle 360x(4n-1)/(4n) Grad des Rotationswinkels umgeschaltet werden, um kontinuierliche Spuren zwischen beiden Rändern des Magnetbands 2 zu erzeugen.

4. Magnetbandaufzeichnungs- und -wiedergabegerät nach Anspruch 2, wobei die Magnetköpfe (21A bis 21H) des Rotationskopfs (1) auf dem Substrat (1A) derart angebracht sind, das Spaltazimuthe benachbarter zwei Magnetköpfe voneinander unterschiedlich sind und zwei Magnetköpfe, die unter einem Mittelwinkel von 180 n/Grad angebracht sind, denselben Spaltazimuth aufweisen.

5. Magnetbandaufzeichnungs- und -wiedergabegerät nach Anspruch 2, wobei dann, wenn eine Halbbildfrequenz, die durch die Halbbildanzahl pro Sekunde festgelegt ist, durch $f_0$ gegeben ist, die Rotationsfrequenz $f_1$ des Rotationskopfs durch $f_0 x(2n-1)/(2n)$ Hz gegeben ist.

6. Magnetbandaufzeichnungs- und -wiedergabegerät nach Anspruch 2, wobei dann, wenn eine Halbbildfrequenz, die durch die Halbbildanzahl pro Sekunde festgelegt ist, durch $f_0$ gegeben ist, die Rotationsfrequenz $f_2$ des Rotationskopfs durch $f_0 x(4n-1)/(4n)$ Hz gegeben ist.

7. Magnetbandaufzeichnungs- und -wiedergabegerät, aufweisend:

einen Rotationskopf (8) mit Magnetköpfen (21A bis 21H) einer Anzahl von 4n, wobei n eine natürlcihe Zahl ist, die auf einem Umfang eines Substrats (8a) mit einem vorbestimmten Druchmesser angeordnet sind, und der sich mit einer vorbestimmten Rotationsfrequenz dreht,

ein Magnetband (2), das sich entlang dem Umfang unter einem Mittelwinkel im Bereich von 360x(2n-1)/(2n) Grad in einer Bewegungsrichtung bewegt, die um einen vorbestimmten Winkel in bezug auf eine Rotationsebene des Rotationskopfs schräg verläuft,

Antriebsmittel (4, 5) zum Bewegen des Magnetbands (2) in einer Richtung, die aus einer Vorwärtsrichtung (X1) und einer Rückwärtsrichtung (X2) ausgewählt ist,

Halbbildsignal-Teilungsmittel (10) zum Unterteilen eines Halbbildsignals (A bis D) eines auf dem Magnetband aufzuzeichnenden Videosignals in wenigstes zwei Halbbildsegmentsignale (A, A2 bis D2) und

Kopfumschaltmittel (13) zum Umschalten von jedem der Magnetköpfe alle 360x(2n-1)/(4n) Grad Rotationswinkel derart, daß das unterteilte Halbbildsegmentsignal auf einem Bereich (2A) von zwei Aufzeichnungsbereichen (2A, 2B) des Magnetbands aufgezeichnet wird, das in zwei Bereiche parallel zur Bewegungsrichtung während der Bewegung in der Vorwärtsrichtung (X1) des Magnetbands unterteilt wird, und das Halbbildsegmentsignal im anderen Bereich 2B der zwei Aufzeichnungsbereiche während der Bewegung in der Rückwärtsrichtung (X2) des Magnetbands aufgezeichnet wird.

8. Magnetbandaufzeichnungs- und -wiedergabegerät nach Anspruch 1, 2 oder 7, wobei dann, wenn eine Bewegungsgeschwindigkeit des Magnetbands zur Erzeugung einer kontinuierlichen Spur zwischen beiden Rändern des Magnetbands durch $V_1$ wiedergegeben ist, eine Bewegungsgeschwindigkeit $V_2$ des Magnetbands durch $V_2 \geq 2x V_1$ gegeben ist.

9. Magnetbandaufzeichnungs- und -wiedergabegerät nach Anspruch 7, wobei die Kopfumschaltmittel (13) jeden der Magnetköpfe alle 360x(2n-1)/(2n) Grad Rotationswinkel des Rotationskopfs umschaltet, um eine kontinuierliche Spur zwischen den beiden Rändern des Magnetbands zu erzeugen.

10. Magnetbandaufzeichnungs- und -wiedergabegerät nach Anspruch 7, wobei Spaltazimuthe benachbarter zwei Magnetköpfe des Rotationskopfs voneinander unterschiedlich sind, zwei Magnetköpfe, die unter einem Mittelwinkel von 260/n Grad angebracht sind, denselben Spaltazimuth aufweisen, und Spaltazimuthe von wenigstens einem Paar von Magnetköpfen, die unter einem Mittelwinkel von 180/n Grad angebracht sind, voneinander unterschiedlich sind.

11. Magnetbandaufzeichnungs- und -wiedergabegerät nach Anspruch 7, wobei dann, wenn die Halbbildfrequenz, die durch Hallbildanzahl pro Sekunde festgelegt ist, durch $f_0$ wiedergegeben ist, die Rotationsfrequenz des Rotationskopfs durch $f_0 \times (2n-1)/(2n)$ Hz wiedergegeben ist.

## Revendications

1. Dispositif d'enregistrement et de reproduction à bande magnétique comprenant :

   une tête rotative (1) comportant au moins quatre têtes magnétiques (21A à 21H) montées sur la circonférence d'un substrat (1A) ayant un diamètre prédéterminé et tournant avec une fréquence de rotation prédéterminée,
   un moyen (3) destiné à guider une bande magnétique (2) se déplaçant le long de ladite circonférence dans une direction de déplacement inclinée d'un angle prédéterminé ($\theta$) par rapport au plan de rotation de ladite tête rotative,
   un moyen d'entraînement (4,5) destiné à déplacer ladite bande magnétique dans une direction sélectionnée entre la direction vers l'avant (X1) et la direction inverse (X2),
   un moyen de division de signal de champ (10) destiné à diviser le signal de champ (A à D) d'un signal vidéo devant être enregistré sur ladite bande magnétique, pour obtenir au moins deux signaux de segment de champ (A1, A2 à D2), et
   un moyen de commutation de tête (13) destiné à sélectionner durant la rotation lesdites têtes magnétiques (21A à 21H) d'une manière telle que ledit signal divisé de segment de champ (A1 à D2) est enregistré sur une zone (2A) des deux zones d'enregistrement (2A,2B) de la bande magnétique (2) divisée en deux zones parallèles à ladite direction de déplacement durant le déplacement dans la direction vers l'avant (X1) de ladite bande magnétique et destiné à sélectionner de manière différentes les têtes magnétiques d'une manière telle que ledit signal de segment de champ est enregistré dans l'autre zone (2B) desdites deux zones d'enregistrement durant le déplacement dans la direction inverse (X2) de ladite bande magnétique (2).

2. Dispositif d'enregistrement et de reproduction à bande magnétique comprenant :

   une tête rotative (1) comportant des têtes magnétiques (21A à 21H) au nombre de 4n, dans lequel n est un nombre entier naturel, montées sur la circonférence d'un substrat (IA) ayant un diamètre prédéterminé et tournant avec une fréquence de rotation prédéterminée,
   une bande magnétique (2) se déplaçant le long de ladite circonférence dans une plage allant de 360 x (4n-1) à 360 (4n) degrés d'angle au centre dans une direction de déplacement incliné d'un angle prédéterminé ($\theta$) par rapport au plan de rotation de ladite tête rotative,,
   un moyen d'entraînement (4,5) destiné à déplacer ladite bande magnétique dans une direction sélectionnée entre la direction vers l'avant (X1) et la direction inverse (X2),
   un moyen de division du signal de champ (10) destiné à diviser le signal de champ (A) d'un signal de vidéo devant être enregistré sur ladite bande magnétique pour former au moins deux signaux de segment de champ (A1,A2) et
   un moyen de commutation de tête (13) destiné à commuter chacune desdites têtes magnétiques (21A à 21H) tous les 360 x (2n-1)/(4n) d'une manière telle que ledit signal divisé de segment de champ est enregistré sur une zone (2A) des deux zones d'enregistrement (2A,2B) de la bande magnétique (2) divisée en deux zones parallèles à la direction de déplacement durant le déplacement dans la direction vers l'avant (X1) de ladite bande magnétique et que ledit signal de segment de champ est enregistré dans l'autre zone (2B) desdites zones d'enregistrement durant le déplacement dans la direction inverse (X2) de ladite bande magnétique.

3. Dispositif d'enregistrement et de reproduction de bande magnétique selon la revendication 2, dans lequel

   chacune desdites têtes magnétiques (21A à 21H) de la tête rotative (1) est commutée tous les 360 x (4n-1)/(4n) degrés d'angle de rotation pour réaliser des pistes continues entre les deux bordures de ladite bande magnétique (2).

4. Dispositif d'enregistrement et de reproduction à bande magnétique selon la revendication 2, dans lequel

   lesdites têtes magnétiques (21A à 21H) de ladite tête rotative (1) sont montées sur ledit substrat (1A) d'une manière telle que les azimuts d'intervalle des deux têtes magnétiques voisines sont différents l'un de l'autre, et des deux têtes magnétiques montées à 180/n degrés d'angle au centre ont le même azimut d'intervalle.

5. Dispositif d'enregistrement et de reproduction de bande magnétique selon la revendication 2, dans lequel

   lorsqu'une fréquence de champ, laquelle est déterminée par le nombre de champs par seconde, est représentée par f0, ladite fréquence de rotation f1 de ladite tête rotative est déterminée par f0x(2n-1)/(2n) Hz.

**6.** Dispositif d'enregistrement et de reproduction à bande magnétique selon la revendication 2, dans lequel

lorsqu'une fréquence de champ, laquelle est déterminée par le nombre de champs par seconde est représentée par f0, la fréquence de rotation f2 de ladite tête rotative est déterminée par f0x(4n-1)/(4n) Hz.

**7.** Dispositif d'enregistrement et de reproduction à bande magnétique comprenant :

une tête rotative (8) comportant des têtes magnétiques (21A à 21H) au nombre de 4n, dans lequel n est un nombre entier naturel, montées sur la circonférence d'un substrat (8A) ayant un diamètre prédéterminé et tournant avec une fréquence de rotation prédéterminée ;

une bande magnétique se déplaçant le long de ladite circonférence dans une plage de 360 x (2n-1)/(2n) degrés d'angle au centre dans une direction de déplacement incliné d'un angle prédéterminé par rapport au plan de rotation de ladite tête rotative ;

un moyen d'entraînement (4,5) destiné à déplacer ladite bande magnétique(2) dans une direction sélectionnée entre la direction vers l'avant (X1) et la direction inverse (X2) ;

un moyen de division de signal de champ (10) destiné à diviser le signal de champ (A à D) d'un signal de vidéo devant être enregistré sur ladite bande magnétique pour former au moins deux signaux de segment de champ (A1, A2, à D2), et

un moyen de commutation de tête (13) destiné à commuter chacune desdites têtes magnétiques tous les 360x(2n-1)/(4n) degrés d'angle de rotation d'une manière telle que ledit signal divisé de segment de champ est enregistré sur une zone (2A) des deux zones d'enregistrement (2A, 2B) de la bande magnétique divisée en deux zones parallèles à ladite direction de déplacement durant le déplacement dans la direction vers l'avant (X1) de ladite bande magnétique, et que ledit signal de segment de champ est enregistré dans l'autre zone (2B) desdites deux zones d'enregistrement durant le déplacement dans la direction inverse (X2) de ladite bande magnétique.

**8.** Dispositif d'enregistrement et de reproduction à bande magnétique selon la revendication 1, 2 ou 7, dans lequel

lorsque la vitesse de déplacement de ladite bande magnétique pour réaliser une piste continue entre les deux bordures de ladite bande magnétique est représentée par V1, la vitesse de déplacement V2 de ladite bande magnétique est détermi-née par $V2 \geq 2 \times V1$.

**9.** Dispositif d'enregistrement et de reproduction à bande magnétique selon la revendication 7, dans lequel

ledit moyen de commutation de tête (13) commute chacune desdites têtes magnétiques tous les 360x(2n-1)/(2n) degrés d'angle de rotation de ladite tête rotative pour réaliser une piste continue entre les deux bordures de ladite bande magnétique.

**10.** Dispositif d'enregistrement et de reproduction à bande magnétique selon la revendication 7, dans lequel

les azimuts d'intervalle de deux têtes magnétiques voisines de ladite tête rotative sont différents l'un de l'autre, deux têtes magnétiques montées à 360/n degrés d'angle au centre ont le même azimut d'intervalle et les azimuts d'intervalle d'au moins une paire de têtes magnétiques montées à 180/n degrés d'angle au centre sont différentes l'un de l'autre.

**11.** Dispositif d'enregistrement et de reproduction à bande magnétique selon la revendication 7, dans lequel

lorsqu'une fréquence de champ, laquelle est déterminée par le nombre de champs par seconde, est représenté par f0, ladite fréquence de rotation de ladite tête rotative est déterminée par f0x(2n-1)/(2n) Hz.

# FIG.1

FIG. 2

EP 0 565 877 B1

F I G. 3

# FIG. 4

FIELD SIGNAL

9

RECORDING CONTROL DEVICE

FIELD SIGNAL
DIVIDING CIRCUIT — 10

11

FIELD SEGMENT
SIGNAL MEMORY

12

RECORDING
CONTROL CIRCUIT

13

HEAD SWITCHING
CIRCUIT

HEAD — 21A

HEAD — 21B

HEAD — 21C

HEAD — 21D

HEAD — 21E

HEAD — 21F

HEAD — 21G

HEAD — 21H

# FIG.5

# F I G. 6

FIELD SIGNAL

14

REPRODUCING CONTROL DEVICE

FIELD SIGNAL REPRODUCING CIRCUIT — 15

FIELD SEGMENT SIGNAL MEMORY — 16

REPRODUCING CONTROL CIRCUIT — 17

HEAD SWITCHING CIRCUIT — 18

HEAD — 21A
HEAD — 21B
HEAD — 21C
HEAD — 21D
HEAD — 21E
HEAD — 21F
HEAD — 21G
HEAD — 21H

EP 0 565 877 B1

# FIG.7

| FIELD TIME (SECOND) | $\frac{1}{60}$ | $\frac{1}{60}$ | $\frac{1}{60}$ | $\frac{1}{60}$ | $\frac{1}{60}$ | $\frac{1}{60}$ | $\frac{1}{60}$ | $\frac{1}{60}$ |
|---|---|---|---|---|---|---|---|---|
| FIELD SIGNAL | A | B | C | D | E | F | G | H |
| ROTATING PERIOD OF ROTARY HEAD (SECOND) | $\frac{1}{52.5}$ | $\frac{1}{52.5}$ | $\frac{1}{52.5}$ | $\frac{1}{52.5}$ | $\frac{1}{52.5}$ | $\frac{1}{52.5}$ | $\frac{1}{52.5}$ |

HEAD 21A — 42A
HEAD 21B — 42B
HEAD 21C — 42C
HEAD 21D — 42D
HEAD 21E — 42E
HEAD 21F — 42F
HEAD 21G — 42G
HEAD 21H — 42H

# FIG. 8

FIG.9

# FIG.10

FIELD TIME (SECOND)

| $\frac{1}{60}$ | $\frac{1}{60}$ | $\frac{1}{60}$ | $\frac{1}{60}$ | $\frac{1}{60}$ |

FIELD SIGNAL

| A | B | C | D | E |

FIELD SEGMENT SIGNAL

| A1 | A2 | B1 | B2 | C1 | C2 | D1 | D2 | E1 | E2 |

ROTATING PERIOD OF ROTARY HEAD (SECOND)

| $\frac{1}{45}$ | $\frac{1}{45}$ | $\frac{1}{45}$ | $\frac{1}{45}$ |

HEAD 21A   32A   32A
HEAD 21B   32F
HEAD 21C   32C
HEAD 21D   32H
HEAD 21E   32E
HEAD 21F   32B   32B
HEAD 21G   32G
HEAD 21H   32D

EP 0 565 877 B1

# FIG.11

FIELD TIME (SECOND)

FIELD SIGNAL

FIELD SEGMENT SIGNAL

ROTATING PERIOD OF ROTARY HEAD (SECOND)

EP 0 565 877 B1

# FIG.12

EP 0 565 877 B1

FIG.13